# EUROPEAN PATENT SPECIFICATION

(11) **EP 2 918 950 B1**
(45) Date of publication and mention of the grant of the patent: **25.11.2020**
(21) Application number: 13835393.3
(22) Date of filing: 29.08.2013
(51) Int. Cl.: F25B 27/00, F25B 1/00, F25B 27/02

(54) **ENGINE-DRIVEN HEAT PUMP CHILLER**
MOTORGETRIEBENER WÄRMEPUMPENKÜHLER
REFROIDISSEUR DE POMPE À CHALEUR À ENTRAÎNEMENT PAR MOTEUR

(30) Priority: 06.09.2012 JP 2012196127
(43) Date of publication of application: 16.09.2015
(73) Proprietor: Yanmar Power Technology Co., Ltd., Osaka City (JP)
(72) Inventor: SUGIMORI, Keiji, Osaka-shi Osaka 531-0076 (JP); KANAI, Hideyuki, Osaka-shi Osaka 531-0076 (JP); NODA, Kazunari, Osaka-shi Osaka 531-0076 (JP)
(74) Representative: Dennemeyer & Associates S.A.
(86) International application number: PCT/JP2013/073175
(87) International publication number: WO 2014/038469

(56) References cited:
- JP-A- S5 837 456
- JP-A- S6 284 270
- JP-A- S6 284 272
- JP-A- H01 139 969
- JP-A- H02 140 568
- JP-A- 2002 340 434
- JP-A- 2006 250 438

## Description

### TECHNICAL FIELD

The present invention relates to an engine driven heat pump chiller whose compressor for compressing a coolant is driven by an engine and which adjusts a temperature of water as a heat medium by using the condensation heat or the evaporation heat of the coolant.

### BACKGROUND ART

A heat pump chiller has traditionally been known that produces hot water by using condensation heat of a coolant and that produces cold water by using evaporation heat of the coolant. A temperature range required to this heat pump chiller on its load side is larger than a temperature range required to a heat pump air-conditioner on its load side. For the heat pump air-conditioner, the required temperature range is, for example, from 20°C (a temperature set for heating) to 27°C (a temperature set for cooling). On the other hand, for a heat pump chiller, the required temperature range is, for example, from 7°C (the cold water) to 45°C (the hot water).

Japanese Laid-Open Patent Publication No. 59-60155 as Patent Document 1 discloses a heat pump chiller that includes an external air side heat exchanger 3 (an air heat exchanger), a load side heat exchanger 7 (a water heat exchanger), and an evaporator 24 activated under decreasing an external air temperature. This heat pump chiller can operate to heat and cool, and the external air side heat exchanger 3 and the load side heat exchanger 7 each function as a condenser or an evaporator by switching a four-way valve 2. The evaporator 24 is activated using the engine exhaust heat as its heat source when a hot fluid is produced (claim 1, '155 Publication, p. 3, lower left column, pp. 15-17), and is used only as an evaporator. Regardless of the switching of the four-way valve 2, first evaporators (3, 7) and a second evaporator (24) are positioned in parallel to the direction of the flow of the coolant (drawings).

Japanese Patent No. 4549205 as Patent Document 2 discloses a heat pump air-conditioner that includes an outdoor heat exchanger 4 (an air heat exchanger), an indoor heat exchanger 5, and an engine exhaust heat recovery device 15. This heat pump air-conditioner can operate to heat and cool, and the outdoor heat exchanger 4 and the indoor heat exchanger 5 each function as a condenser or an evaporator by switching a four-way valve 3. The engine exhaust heat recovery device 15 is activated by using the engine exhaust heat as a heat source during a heating operation and is used only as an evaporator. Regardless of the switching of the four-way valve 2, first evaporators (4, 5) and a second evaporator (15) are positioned in parallel to the direction of the flow of the coolant (Fig. 1). Patent Document 2 also discloses control of adjusting the amount of coolant passing through each of the outdoor heat exchanger 4 and the engine exhaust heat recovery device 15 during a heating operation (the paragraph 0030). The amount of coolant passing through the outdoor heat exchanger 4 is controlled based on the degree of superheat of the coolant acquired after the coolant passing through the outdoor heat exchanger 4 and the coolant passing through the engine exhaust heat recovery device 15 join each other. The amount of coolant passing through the engine exhaust heat recovery device 15 is controlled based on the degree of superheat acquired after passing through the engine exhaust heat recovery device 15 and before the joining (the paragraph 0031). Another example of a heat pump type refrigerating apparatus with an engine-driven compressor can be found in JP H02-140568 and which has the features of the preamble of claim 1.

### PRIOR ART DOCUMENTS

### Patent Documents

Patent Document 1: Japanese Laid-Open Patent Publication No. 59-60155
Patent Document 2: Japanese Patent No. 4549205
Patent Document 3: Japanese Publication No. JP H02-140568.

### SUMMARY OF THE INVENTION

### Problems that the Invention Is to Solve

There are cases in which the load is small during a cold water operation. This refers to the case, for example, where the temperature of the water exiting from the chiller is set at 7.0°C when the temperature of the water entering into the chiller is 7.1 °C. In this case, to reduce the amount of circulating coolant, the chiller is controlled to reduce the number of operating compressors and to reduce the number of rotations of each of the operating compressor(s). When the number of rotations of an operating compressor is reduced to be lower than a predetermined permissible lowest number of rotations, the operation of the compressor cannot be continued. The amount of exchanged heat in the water heat exchanger of the chiller cannot therefore be suppressed to be equal to or lower than an amount of exchange heat determined based on the permissible lowest number of rotations thereof. In the case where the temperature of the water is low, when the operation of the chiller is continued, a trouble occurs that the water in the water heat exchanger freezes. In the case where a temperature of the water is low and a low load is required, the freezing of the water can be prevented by repeating alternately, termination of the operation of the heat pump chiller executed when the temperature of the water approaches an target temperature and a restarting of the operation thereof executed when the water temperature increases, that is, what-is-called "start and stop". The repetition of the "start and stop" however causes a trouble that an excessive load is imposed on the compressor.

As above, when the compressor is continuously driven, a problem is present that, during the cold water operation, the amount of exchanged heat in the water heat exchanger cannot be reduced to be lower than an amount of exchange heat determined based on the permissible lowest number of rotations thereof. Patent Documents 1 and 2 do not disclose or even suggest these problems, and do not naturally disclose any configuration capable of solving the problems.

Accordingly, the invention of the present application provides a heat pump chiller capable of reducing the amount of exchanged heat in the water heat exchanger to be lower than the capacity of the compressor determined based on the permissible lowest number of rotations thereof during the cold water operation without discontinuing the driving of the compressor.

### Means to Solve the Problems.

The engine driven heat pump chiller according to the present invention is set out in claim 1.

The engine driven heat pump chiller comprises an engine and a compressor for compressing a coolant, the compressor being driven by the engine and that adjusts a temperature of water as a heat medium by using condensation heat or evaporation heat of the coolant, characterised by the engine driven heat pump chiller further comprising: an air heat exchanger that functions as a condenser condensing the coolant by transmitting heat from the coolant to the air or that functions as an evaporator evaporating the coolant by transmitting heat from the air to the coolant; a water heat exchanger that functions as a cooling device cooling the water by transmitting heat from the water to a gas-liquid two-phase coolant or that functions as a heating device heating water by transmitting heat from a discharged coolant of the compressor to the water; an operation switching mechanism that switches between a cold water operation causing the water heat exchanger to function as a cooling device and a hot water operation causing the water heat exchanger to function as a heating device; a water temperature sensor that detects a temperature of the water discharged from the water heat exchanger; an engine exhaust heat recovery device that functions as an evaporator of the coolant evaporating the coolant by transmitting exhaust heat of the engine to the coolant through an exhaust heat medium; a first expansion valve that adjusts a flow of the coolant in a state of a liquid flowing toward the air heat exchanger during the hot water operation, the first expansion valve adjusting the flow of the coolant in a state of the liquid flowing toward the water heat exchanger during the cold water operation; a second expansion valve that adjusts a flow of the coolant in a state of the liquid flowing toward the engine exhaust heat recovery device; a flow direction control mechanism that has the first expansion valve and the second expansion valve disposed in parallel to each other downstream a coolant inflow part thereof; a flow adjusting valve that adjusts a flow of the exhaust heat medium flowing through the engine exhaust heat recovery device; and a control apparatus that controls number of rotations of the compressor for a temperature of water discharged from the water heat exchanger to converge on a set target temperature, wherein when the number of rotations is equal to or lower than predetermined number of rotations and the temperature of the discharged water is equal to or lower than the aimed temperature during the cold water operation, the control apparatus determines that an necessary number of rotations of the compressor is equal to or lower than permissible lowest number of rotations, and controls apertures of the second expansion valve and the flow adjusting valve for the coolant and the exhaust heat medium to flow through the engine exhaust heat recovery device.

In the heat pump chiller, when the hot water operation is currently executed and the exhaust heat medium flows through the engine exhaust heat recovery device, the control apparatus controls the aperture of the first expansion valve based on the degree of superheat of the coolant after the coolant passing through the engine exhaust heat recovery device joins the coolant passing through the air heat exchanger, and controls the aperture of the second expansion valve based on the degree of superheat of the coolant after passing through the engine exhaust heat recovery device and before the joining the coolant passing through the air heat exchanger.

### Effect of the Invention

The engine driven heat pump chiller according to the present invention can reduce the amount of exchanged heat of the water heat exchanger to be lower than that caused by the capacity of the compressor determined based on the permissible lowest number of rotations thereof during the cold water operation without discontinuing the driving of the compressor.

### BRIEF DESCRIPTION OF DRAWINGS

[Fig. 1] Fig. 1 is a configuration diagram of a heat pump chiller according to a first embodiment.
[Fig. 2] Fig. 2 is a configuration diagram of the heat pump chiller performing a cold water operation.
[Fig. 3] Fig. 3 is a configuration diagram of the heat pump chiller performing a hot water operation.
[Fig. 4] Fig. 4 is a configuration diagram of the heat pump chiller performing the cold water operation in low load state.
[Fig. 5] Fig. 5 is a diagram indicating a relation among a coolant low pressure, a coolant high pressure, and a permissible pressure range for the compressor.
[Fig. 6] Fig. 6 is a configuration diagram of a flow direction control mechanism according to a second embodiment.
[Fig. 7] Fig. 7 is a configuration diagram of a flow direction control mechanism according to a third embodiment.
[Fig. 8] Fig. 8 is a configuration diagram of a flow direction control mechanism according to a fourth embodiment.

### EMBODIMENT FOR CARRYING OUT THE INVENTION

### First Embodiment

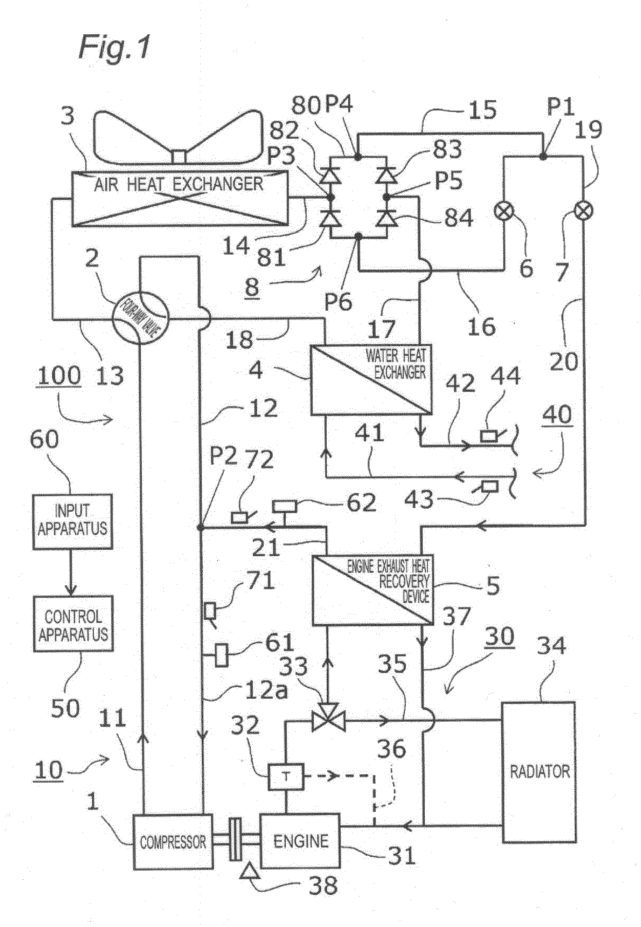

A heat pump chiller 100 according to a first embodiment will be described with reference to Fig. 1. Fig. 1 is a configuration diagram of the heat pump chiller 100 according to the first embodiment.

The heat pump chiller 100 includes a coolant circuit 10 for a coolant to circulate therein, a cooling water circuit 30 for engine cooling water to circulate therein, a water circuit 40 for water as a heat medium to flow therein, a control apparatus 50, and an input apparatus 60. A user orders an operation of the heat pump chiller 100 by operating the input apparatus 60. The control apparatus 50 controls driving of each of the coolant circuit 10, the cooling water circuit 30, and the water circuit 40 based on an input order. The heat pump chiller 100 adjusts the temperature of the water flowing in the water circulating path 40 based on this manipulation.

The coolant circuit 10 includes a compressor 1, a four-way valve 2, an air heat exchanger 3, a water heat exchanger 4, an engine exhaust heat recovery device 5, a first expansion valve 6, a second expansion valve 7, and a flow direction control mechanism 8.

The coolant circuit 10 includes a discharge path 11, an intake path 12, a gas path 13, a liquid path 14, a high pressure liquid path 15, a low pressure liquid path 16, a liquid path 17, a gas path 18, a high pressure liquid path 19, a low pressure liquid path 20, and a low pressure gas path 21. The discharge path 11 connects the compressor 1 to the four-way valve 2. The intake path 12 connects the four-way valve 2 to the compressor 1. The gas path 13 connects the four-way valve 2 to the air heat exchanger 3. The liquid path 14 connects the air heat exchanger 3 to the flow direction control mechanism 8. The high pressure liquid path 15 connects the flow direction control mechanism 8 to the first expansion valve 6. The low pressure liquid path 16 connects the first expansion valve 6 to the flow direction control mechanism 8. The liquid path 17 connects the flow direction control mechanism 8 to the water heat exchanger 4. The gas path 18 connects the water heat exchanger 4 to the four-way valve 2. The high pressure liquid path 19 branches from the high pressure liquid path 15 at a connection point P1 and connects the high pressure liquid path 15 to the second expansion valve 7. The low pressure liquid path 20 connects the second expansion valve 7 to the engine exhaust heat recovery device 5. The low pressure gas path 21 connects the engine exhaust heat recovery device 5 to the intake path 12 and joins the intake path 12 at a connection point P2. A joined path 12a refers to a portion disposed at the downstream side (the compressor 1 side) with respect to the connection point P2 in the intake path 12.

The compressor 1 sucks the coolant from the intake path 12, compresses the coolant, and discharges the coolant to the discharge path 11. The four-way valve (an operation switching mechanism) 2 connects the discharge path 11 to the gas path 13 and also connects the intake path 12 to the gas path 18 when a cold water operation is performing, and connects the discharge path 11 to the gas path 18 and also connects the intake path 12 to the gas path 13 when a hot water operation is performing. The cold water operation refers to an operation to cool the water in the water circuit 40, and the hot water operation refers to an operation to heat the water in the water circuit 40. The air heat exchanger 3 functions as a condenser that condenses the coolant by transmitting heat from the coolant to air during the cold water operation, and functions as an evaporator that evaporates the coolant by transmitting heat from air to the coolant during the hot water operation. The water heat exchanger 4 functions as a cooling device that cools water by transmitting heat from water to a gas-liquid two-phase coolant during the cold water operation, and functions as a heating device that heats the water by transmitting heat from the coolant in the discharge path 11 to the water during the hot water operation. The engine exhaust heat recovery device 5 functions as an evaporator that evaporates the coolant by transmitting heat from the engine cooling water absorbing the exhaust heat of an engine 31 to the coolant as described later. The first expansion valve 6 adjusts the flow of the coolant in a state of the liquid flowing toward the air heat exchanger 3 during the hot water operation, and adjusts the flow of the coolant in a state of the liquid flowing toward the water heat exchanger 4 during the cold water operation. The second expansion valve 7 adjusts the flow of the coolant in a state of the liquid flowing toward the engine exhaust heat recovery device 5. The first expansion valve 6 and the second expansion valve 7 are disposed in parallel to each other downstream a coolant inflow part of the flow direction control mechanism 8. As a result, the water heat exchanger 4 and the engine exhaust heat recovery device 5 are disposed in parallel to each other in the direction of the coolant flow during the cold water operation, and the air heat exchanger 3 and the engine exhaust heat recovery device 5 are disposed in parallel to each other in the direction of the coolant flow during the hot water operation. The configuration of the flow direction control mechanism 8 will be described below.

In Fig. 1, the flow direction control mechanism 8 includes a closed path 80 and four non-return valves 81, 82, 83, and 84. The four non-return valves 81, 82, 83, and 84 are disposed in the closed path 80. In the closed path 80, entrances of the two non-return valves 81 and 82 are disposed on the opposite side of the entrances of the other two non-return valves 83 and 84. Connection points P3, P4, P5, and P6 are disposed each between the adjacent two of the non-return valves 81, 82, 83, and 84. The liquid path 14 is connected to the connection point P3. The high pressure liquid path 15 is connected to the connection point P4. The liquid path 17 is connected to the connection point P4, The low pressure liquid path 16 is connected to the connection point P5. The function of the flow direction control mechanism 8 will be described in the description made later for the cold water operation and the hot water operation.

The cooling water circuit 30 includes the engine 31, a thermostat valve 32, a three-way valve 33, a radiator 34, and the engine exhaust heat recovery device 5. The engine 31 drives the compressor 1. The engine exhaust heat recovery device 5 belongs to both of the coolant circuit 10 and the cooling water circuit 30.

The cooling water circuit 30 includes a main path 35, a return path 36, and an exhaust heat recovery path 37. The main path 35 returns the cooling water from the engine 31 to the engine 31 through the thermostat valve 32, the three-way valve 33, and the radiator 34. The return path 36 branches from the main path 35 at the thermostat valve 32 and joins the main path 35 downstream the radiator 34. The exhaust heat recovery path 37 branches from the main path 35 at the three-way valve 33, passes through engine exhaust heat recovery device 5 and then joins the main path 35 downstream the radiator 34engine exhaust heat recovery device 5.

The thermostat valve 32 opens either the main path 35 or the return path 36 based on the temperature of the cooling water in the main path 35 or the engine 31, and closes the other. When the temperature of the cooling water is lower than a predetermined temperature (for example, 60°C), the thermostat valve 32 closes the main path 35 and opens the return path 36. In this case, the cooling water circulates loop pass passing only the engine 31 and the thermostat valve 32. The cooling water at a low temperature is not supplied to the radiator 34 and the engine exhaust heat recovery device 5. When the temperature of the cooling water is equal to or higher than the predetermined temperature, the thermostat valve 32 opens the main path 35 and closes the return path 36, The three-way valve (a flow control valve) 33 adjusts the apertures of the main path 35 and the exhaust heat recovery path 37 based on an order from the control apparatus 50 to change the flow of the cooling water flowing through the main path 35 and the flow of the cooling water flowing through the exhaust heat recovery path 37. The three-way valve 33 can completely close either the main path 35 or the exhaust heat recovery path 37. When the three-way valve 33 opens the main path 35, the cooling water returns to the engine 31 through the radiator 34. When the three-way valve 33 opens the exhaust heat recovery path 37, the cooling water returns to the engine 31 through the engine exhaust heat recovery device 5. In this case, the cooling water is supplied to the engine exhaust heat recovery device 5 and the engine exhaust heat recovery device 5 can therefore function as an evaporator for evaporating the coolant by transmitting heat from the engine cooling water absorbing the exhaust heat of the engine 31 to the coolant.

The water circuit 40 includes the water heat exchanger 40, an entering water path 41, and an exiting water path 42. The water heat exchanger 40 belongs to both of the coolant circuit 10 and the water circuit 40. The water circuit 40 may be either a closed circuit or an open circuit. When the water circuit 40 is a closed circulation path, the entering water path 41 and the exiting water path 42 are connected to each other through the heat exchanger on the load side.

The heat pump chiller 100 includes various types of sensors. The coolant circuit 10 includes a first pressure sensor 61, a first temperature sensor 71, a second pressure sensor 62, and a second temperature sensor 72. The first pressure sensor 61 and the first temperature sensor 71 respectively detect the pressure and the temperature of the coolant in the joined path 12a. The second pressure sensor 62 and the second temperature sensor 72 respectively detect the pressure and the temperature of the coolant in the low pressure gas path 21. The cooling water circuit 30 includes a rotation number sensor 38 that detects the number of rotations of the engine 31. The water circuit 40 includes an entering water temperature sensor 43 and an exiting water temperature sensor 44. The entering water temperature sensor 43 detects the temperature of the water in the entering water path 41 and the exiting water temperature sensor 44 detects the temperature of the water in the exiting water path 42.

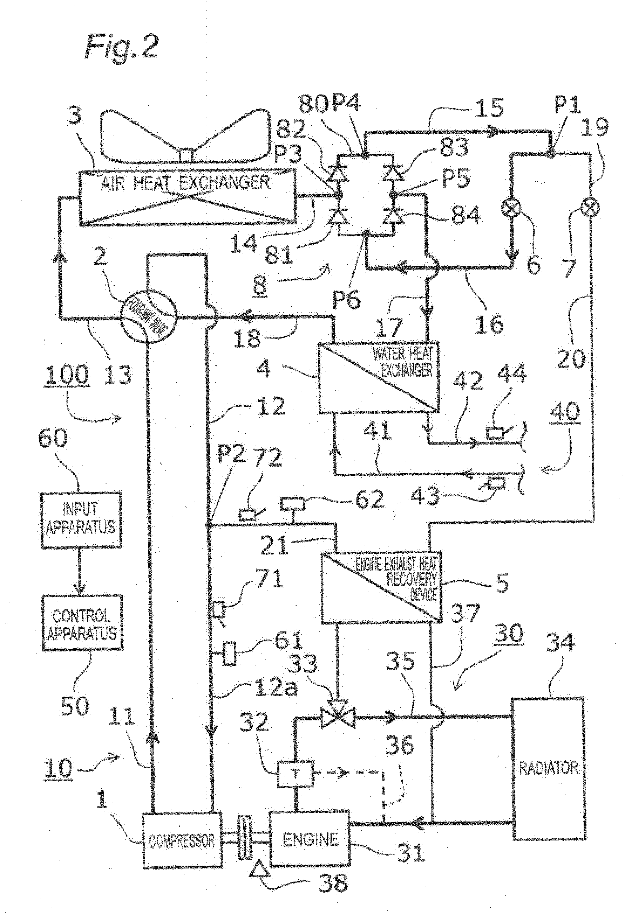

The cold water operation will be described with reference to Fig. 2. Fig. 2 is a configuration diagram of the heat pump chiller 100 performing the cold water operation.

During the cold water operation, the four-way valve 2 connects the discharge path 11 to the gas path 13 and also connects the intake path 12 to the gas path 18. The coolant in a state of high pressure gas discharged from the compressor 1 therefore flows to the air heat exchanger 3.

The temperature of the coolant flowing through the air heat exchanger 3 is higher than the temperature of the air flowing through the air heat exchanger 3 and the heat therefore moves from the coolant to the air. As a result, the coolant loses its condensation heat, is liquefied, and becomes a high pressure liquid. The air heat exchanger 3 therefore functions as a condenser of the coolant condensing the coolant by transmitting heat the coolant to the air.

The coolant in the state of high pressure liquid flows from the air heat exchanger 3 to the connection point P3 of the flow direction control mechanism 8 through the liquid path 14. The connection point P3 is a coolant inflow part of the flow direction control mechanism 8 during the cold water operation, is positioned on the exit side of the non-return valves 81 and 83, and is positioned on the entrance side of the non-return valve 82. The coolant therefore flows from the connection point P3 to the high pressure liquid path 15 through the non-return valve 82 and the connection point P4. During an ordinary cold operation, the three-way valve 33 is controlled for the cooling water not to flow through the engine exhaust heat recovery device 5 and the second expansion valve 7 is closed. The coolant therefore passes only through the first expansion valve 6. The coolant in the state of high pressure liquid expands at the first expansion valve 6 and becomes a low pressure gas-liquid two-phase coolant. The low pressure gas-liquid two-phase coolant flows from the low pressure liquid path 16 to the connection point P6 of the flow direction control mechanism 8. The connection point P6 is present in the entrance side of the four non-return valves 81, 82, 83, and 84 while the coolant in the state of high pressure liquid flows through the connection points P3 and P4. Due to the difference in the pressure therebetween, the coolant at the connection point P6 can pass only through the non-return valve 84 and cannot pass through the non-return valves 81 and 83. The low pressure gas-liquid two-phase coolant therefore flows from the connection point P6 to the water heat exchanger 4 through the non-return valve 84, the connection point P5, and the liquid path 17.

The temperature of the coolant flowing through the water heat exchanger 4 is lower than the temperature of the water flowing through the water heat exchanger 4 and the heat therefore moves from the water to the coolant. As a result, the coolant acquires the evaporation heat, is gasified, and becomes a low pressure gas. The water is cooled by releasing the heat to the coolant. The water heat exchanger 4 functions as a cooling device of the water circuit 40 by transmitting a heat from the water to the gas-liquid two-phase coolant.

The coolant in the state of low pressure gas flows from the water heat exchanger 4 to the gas path 18. The coolant is sucked by the compressor 1 because the intake path 12 is connected to the gas path 18.

During the execution of the cold water operation, the coolant circulates in the coolant circuit 10 along the above paths.

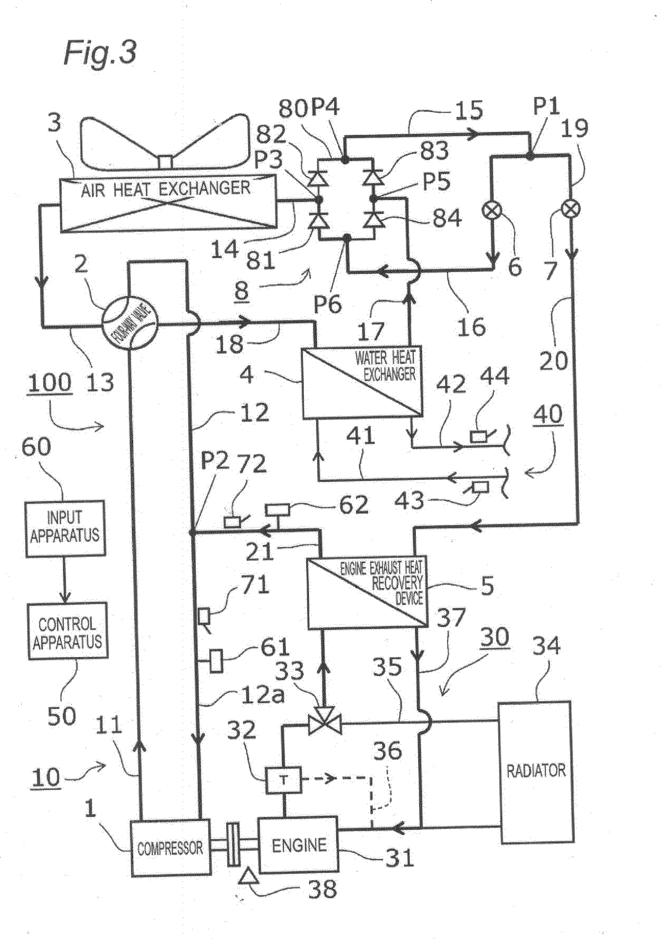

The hot water operation will be described with reference to Fig. 3. Fig. 3 is a configuration diagram of the heat pump chiller 100 performing the hot water operation.

During the hot water operation, the four-way valve 2 connects the discharge path 11 to the gas path 18 and also connects the intake path 12 to the gas path 13. The coolant in the state of high pressure gas discharged from the compressor 1 therefore flows to the water heat exchanger 4.

The temperature of the coolant flowing through the water heat exchanger 4 is higher than the temperature of the water flowing through the water heat exchanger 4 and the heat therefore moves from the coolant to the water. As a result, the coolant loses the condensation heat, is liquefied, and becomes a high pressure liquid. The water is heated by absorbing the heat from the coolant. The water heat exchanger 4 functions as a heating device of the water circuit 40 by transmitting heat from the coolant of the discharge path 11 to the water circuit 40.

The coolant in the state of high pressure liquid flows from the water heat exchanger 4 to the connection point P5 of the flow direction control mechanism 8 through the liquid path 17. The connection point P5 is a coolant inflow part of the flow direction control mechanism 8 during the hot water operation, is positioned on the entrance side of the non-return valve 83, and is positioned on the exit side of the non-return valves 82 and 84. The coolant therefore flows from the connection point P5 to the high pressure liquid path 15 through the non-return valve 83 and the connection point P4. The coolant flows from the high pressure liquid path 15 to the first expansion valve 6 and also flows from the connection point P1 of the high pressure liquid path 15 to the second expansion valve 7 through the high pressure liquid path 19. During an ordinary hot water operation, the coolant passes through the first expansion valve 6 and the second expansion valve 7. The coolant in the state of high pressure liquid expands at the expansion valve 6 and becomes a low pressure gas-liquid two-phase coolant. The low pressure gas-liquid two-phase coolant flows from the low pressure liquid path 16 to the connection point P6 of the flow direction control mechanism 8. The connection point P6 is present on the entrance side of the four non-return valves 81, 82, 83, and 84, and the coolant in the state of high pressure liquid flows through the connection points P4 and P5. The coolant at the connection point P6 can pass through only the non-return valve 81 and cannot pass through the non-return valves 82 and 84 because of the difference in the pressure therebetween. The low pressure gas-liquid two-phase coolant therefore flows from the connection point P6 to the air heat exchanger 3 through the non-return valve 81, the connection point P3, and the liquid path 14. The flow of the coolant passing through the second expansion valve 7 will be described later.

The temperature of the coolant flowing through the air heat exchanger 3 is lower than the temperature of the air flowing through the air heat exchanger 3 and the heat therefore moves from the air to the coolant. As a result, the coolant acquires the evaporation heat, is evaporated, and becomes a low pressure gas. The air heat exchanger 3 functions as an evaporator of the coolant evaporating the coolant by transmitting heat from the air to the coolant.

The coolant in the state of low pressure gas flows from the air heat exchanger 3 to the gas path 13. The coolant is sucked by the compressor 1 because the intake path 12 is connected to the gas path 13.

On the other hand, the coolant passing through the second expansion valve 7 expands at the second expansion valve 7 and becomes the low pressure gas-liquid two-phase coolant. The low pressure gas-liquid two-phase coolant flows to the engine exhaust heat recovery device 5 through the low pressure liquid path 20.

The temperature of the coolant flowing through the engine exhaust heat recovery device 5 is lower than the temperature of the cooling water flowing through the engine exhaust heat recovery device 5 and the heat therefore moves from the cooling water to the coolant. As a result, the coolant acquires the evaporation heat, is gasified, and becomes a low pressure gas. The engine exhaust heat recovery device 5 functions as an evaporator of the coolant evaporating the coolant by transmitting heat from the cooling water to the coolant.

The coolant in the low pressure gas form flows from the engine exhaust heat recovery device 5 to the intake path 12 through the low pressure gas path 21. At the connection point P2, the coolant from the engine exhaust heat recovery device 5 joins the coolant from the air heat exchanger 3. The joined coolant flows through the joined path 12a and is sucked by the compressor 1.

During the execution of the hot water operation, the coolant circulates in the coolant circuit 10 along the above paths.

The control executed during the cold water operation will be described below.

The control apparatus 50 controls the number of rotations of the compressor 1 so as to converge the temperature of the water discharged from the water heat exchanger 4 to a target temperature. The setting of the target temperature is executed by operating the input apparatus 60 by the user. The temperature of the water discharged from the water heat exchanger 4 is detected by the exiting water temperature sensor 44,

When a stop of the operation of the compressor 1 may occur due to a low load thereof during the cold water operation, the heat pump chiller 100 uses the exhaust heat of the engine 31 as a load to avoid the stop of the compressor 1. The cold water operation executed in this case will be referred to as "cold water operation in a low load". During the cold water operation in a low load, similarly to the ordinary hot water operation, the control apparatus 50 controls the three-way valve 33 and the second expansion valve for the coolant and the cooling water to flow through the engine exhaust heat recovery device 5.

The compressor 1 is controlled so as to reduce the number of rotations of the compressor 1 as the magnitude of the load is reduced. The low load refers to the load in the case where the necessary number of rotations of the compressor 1 becomes equal to or lower than the permissible lowest number of rotations of the compressor 1 due to a decrease of the number of rotations thereof. In this embodiment, the necessary number of rotations of the compressor is determined to be equal to or lower than the permissible lowest number of rotations when the following condition (1) or (2) is satisfied.

Condition (1): The number of rotations of the compressor 1 is equal to or lower than predetermined number of rotations and the value detected by the exiting water temperature sensor 44 is equal to or lower than the target temperature.

Condition (2): The number of rotations of the compressor 1 is equal to or lower than the predetermined number of rotations and a coolant low pressure is equal to or lower than a predetermined pressure.

The number of rotations of the compressor 1 is identified based on the value detected by the rotation number sensor 38. The number of rotations of the compressor 1 corresponds to the number rotations of the engine 31. The coolant low pressure is the pressure of the coolant sucked by the compressor 1 (the pressure of the coolant flowing through the joined path 12a) and is detected by the first pressure sensor 61. The predetermined number of rotations and the predetermined pressure are each set as follows. There are the permissible lowest number of rotations and the lower limit value of the coolant low pressure in which an operation of the compressor 1 cannot be permitted basically. The predetermined number of rotations is therefore set to be a value that is larger by a specific amount than the permissible lowest number of rotations, and the predetermined pressure is therefore set to be the lower limit value of the coolant low pressure or a value that is larger than that by a specific amount.

In the case where the execution of the cold water operation is ordered, when the necessary number of rotations of the compressor 1 is equal to or lower than the permissible lowest number of rotations thereof, the cold water operation for a low load is executed and, when the necessary number of rotations of the compressor 1 is equal to or greater than the permissible lowest number of rotations thereof, the ordinary cold water operation is executed. During the ordinary cold water operation, the second expansion valve 7 is closed and the three-way valve 33 prohibits that the cooling water follows through the exhaust heat recovery path 37. When the necessary number of rotations of the compressor 1 is equal to or lower than the permissible lowest number of rotations, the control apparatus 50 opens the second expansion valve 7 and controls the three-way valve 33 as the cooling water flows through the exhaust heat recovery path 37. On the other hand, when the necessary number of rotations of the compressor 1 recovers to the number equal to or higher than the permissible lowest number of rotations, the control apparatus 50 closes the second expansion valve 7 and controls as the cooling water flows through the exhaust heat recovery path 37. In this case, the three-way valve 33 may be controlled as the overall amount of the cooling water flows through the engine exhaust heat recovery device 5 and no cooling water flows through the main path 35 or may be controlled as the cooling water flows through both of engine exhaust heat recovery device 5 and the main path 35 by adjusting the aperture thereof. The cold water operation in a low load will be described below in terms of the points different from the ordinary cold water operation.

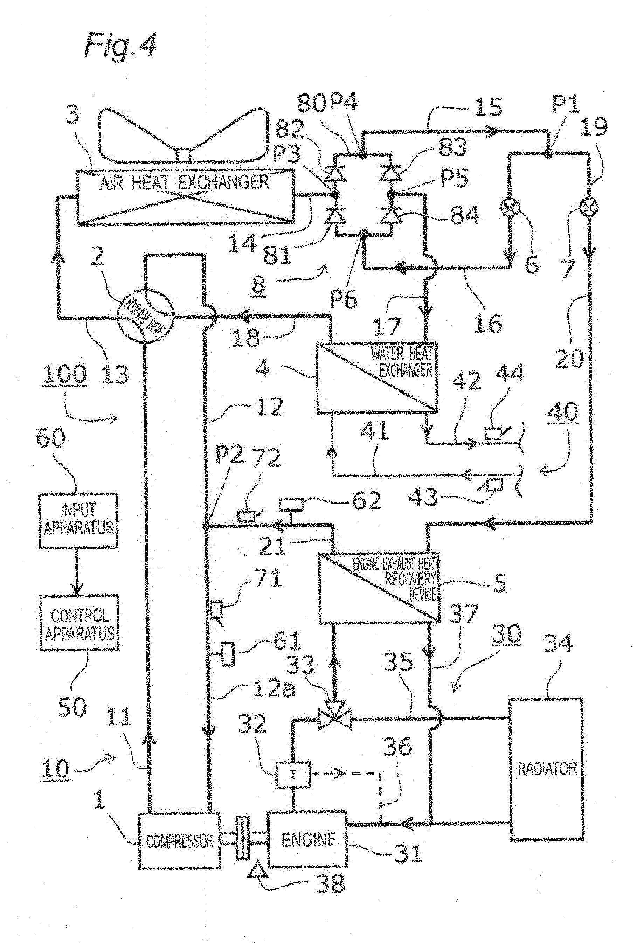

The cold water operation in a low load will be described with reference to Fig. 4. Fig. 4 is a configuration diagram of the heat pump chiller 100 performing the cold water operation for a low load.

Because the second expansion valve 7 is open, the coolant passes through the second expansion valve 7 and flows to the engine exhaust heat recovery device 5. At the connection point P2, the coolant from the engine exhaust heat recovery device 5 joins the coolant from the air heat exchanger 3 and the joined coolant is sucked by the compressor 1 .

During the cold water operation in a low load, the coolant is distributed to the water heat exchanger 4 and the engine exhaust heat recovery device 5 and receives heat in both of the water heat exchanger 4 and the engine exhaust heat recovery device 5. In this case, the temperature of the cooling water flowing through the engine exhaust heat recovery device 5 is equal to or higher than 60°C as above and is higher than the temperature of the water flowing through the water circuit 40. The coolant evaporation pressure in the engine exhaust heat recovery device 5 therefore becomes higher than the coolant evaporation pressure in the water heat exchanger 4, and the coolant flow to the water heat exchanger 4 is reduced. The opening of the second expansion valve therefore enables the amount of exchanged heat in the water heat exchanger 4 to efficiently be reduced without reducing the number of rotations of the compressor 1.

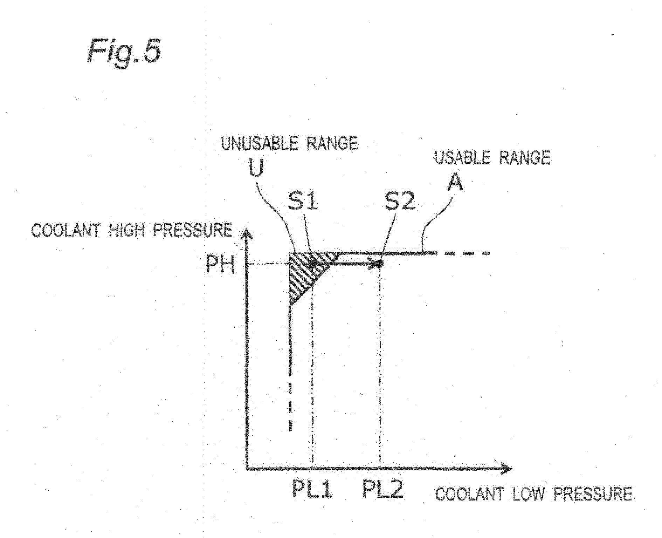

An effect achieved when the engine exhaust heat recovery device 5 is used as the evaporator will be described with reference to Fig. 5 from the viewpoint of variation of the coolant pressure. Fig. 5 is a diagram of the relation among the coolant low pressure, the coolant high pressure, and a pressure range for the compressor 1 to be usable.

In Fig. 5, the axis of abscissa represents the magnitude of the coolant low pressure and the axis of ordinate represents the magnitude of the coolant high pressure. As above, the coolant low pressure is the pressure of the coolant sucked by the compressor 1 (the pressure of the coolant flowing through the intake path 12) and is detected by the first pressure sensor 61. The coolant high pressure is the pressure of the coolant discharged from the compressor 1 (the pressure of the coolant flowing through the discharge path 11) and is detected by a pressure sensor which is not depicted. When driving the compressor 1, the lower limit value of a permissible coolant low pressure is present and an upper limit value of a permissible coolant high pressure is also present.

In Fig. 5, a square-like area "A" represents a range for the compressor 1 to be usable. A triangle-like area U indicated by oblique lines is positioned on the upper left of the square-like area A. The area U represents a range for the compressor 1 to be unusable. The unusable area U represents an area within which the coolant high pressure is relatively high and the coolant low pressure is relatively low. In Fig. 5, a state S1 indicates the coordinate point that corresponds to a coolant low pressure PL1 and a coolant high pressure PH, and a state S2 indicates the coordinate point that corresponds to a coolant low pressure PL2 and the coolant high pressure PH. The state S1 is present in the unusable area U and, in this case, the driving of the compressor 1 cannot be maintained.

During the cold water operation in a low load, not only the water heat exchanger 4 but also the engine exhaust heat recovery device 5 are used as the evaporators. The coolant low pressure is determined based on the flow volume and the evaporation pressure of the coolant flowing through the water heat exchanger 4, and the flow volume and the evaporation pressure of the coolant flowing through the engine exhaust heat recovery device 5. The evaporation pressure of the overall coolant is therefore high engine exhaust heat recovery device 5in the case where the evaporation pressure of the coolant flowing through the water heat exchanger 4 is low even when the evaporation pressure of the coolant flowing through the engine exhaust heat recovery device 5 is high. As a result, the coolant low pressure becomes high. As the state S1 in the unusable area U transits to the state S2 in the usable area A because of the increase of the coolant in the low pressure, the driving of the compressor 1 can be maintained.

The control executed during the hot water operation will be described with reference to Fig. 3.

As above, during the ordinary hot water operation, the cooling water flows through the engine exhaust heat recovery device 5. During the ordinary hot water operation, the control apparatus 50 controls the aperture of the first expansion valve 6 based on the degree of superheat of the coolant flowing through the joined path 12a, and controls the aperture of the second expansion valve 7 based on the degree of superheat of the coolant flowing through the low pressure gas path 21. For example, the aperture of the first expansion valve 6 is controlled to prevent the coolant low pressure from becoming to lower than the predetermined pressure, and the apertures of the first expansion valve 6 and the second expansion valve 7 are controlled to set the load on the compressor 1 to be minimal as far as the coolant low pressure is higher than the predetermined pressure.

The degree of superheat of the coolant can be identified by detecting the pressure of the coolant and the temperature of the coolant. For example, a saturated steam temperature corresponding to the pressure of the coolant is identified based on the saturated steam line of the coolant, and the degree of the superheat is identified as a temperature difference between the temperature of the coolant and the saturated steam temperature. The degree of superheat of the coolant flowing through the joined path 12 is therefore identified based on the value detected by the first pressure sensor 61 and the value detected by the first temperature sensor 71. Similarly, the degree of superheat of the coolant flowing through the low pressure gas path 21 is identified based on the value detected by the second pressure sensor 62 and the value detected by the second temperature sensor 72.

A control may be executed as the degree of superheat of the low pressure gas path 21 becomes to be a degree of superheat that is higher than the degree of superheat of the joined path 12a by a predetermined degree of super heat or more. In this case, the flow of the coolant passing through the engine exhaust heat recovery device 5 is adjusted corresponding to the outer atmosphere temperature passing through the air heat exchanger 3, and the flow volume of the coolant suffering a pressure loss caused by the engine exhaust heat recovery device 5 is therefore suppressed.

### Second Embodiment

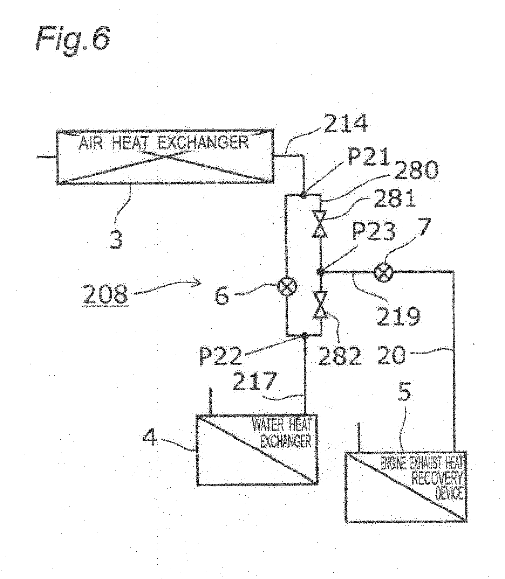

A flow direction control mechanism 208 of a heat pump chiller according to a second embodiment will be described with reference to Fig. 6. Fig. 6 is a configuration diagram of the flow direction control mechanism 208 according to the second embodiment.

In Fig. 6, the heat pump chiller according to the second embodiment includes liquid paths 214 and 217, and a high pressure liquid path 219 instead of the liquid paths 14 and 17, and the high pressure liquid path 19 according to the first embodiment. The liquid path 214 connects the air heat exchanger 3 to the first expansion valve 6. The liquid path 217 connects the first expansion valve 6 to the water heat exchanger 4. The high pressure path 219 connects the flow direction control mechanism 208 to the second expansion valve 7.

The flow direction control mechanism 208 includes an open path 280, and two electromagnetic valves 281 and 282. The two electromagnetic valves 281 and 282 are disposed in the open path 280. The one end of the open path 280 is a connection point P21 and the other end thereof is a connection point P22, and a connection point P23 is disposed between the two electromagnetic valves 281 and 282. The open path 280 is connected to the middle part of the liquid path 214 at the connection point P21. The open path 280 is connected to the middle part of the liquid path 217 at the connection point P22. The high pressure liquid path 219 is connected to the open path 280 at the connection point P23.

During the cold water operation, the electromagnetic valve 281 is opened and the electromagnetic valve 282 is closed. The coolant from the air heat exchanger 3 therefore flows to the water heat exchanger 4 through the first expansion valve 6, the connection point P22, and the liquid path 217 by using the connection point P21 as a coolant inflow part. When the aperture of the second expansion valve 7 is controlled, this coolant flows from the liquid path 214 to the second expansion valve 7 through the connection point P21, the electromagnetic valve 281, the connection point P23, and the high pressure liquid path 219. During the hot water operation, the electromagnetic valve 281 is closed and the electromagnetic valve 282 is opened. The coolant from the water heat exchanger 4 therefore flows from the liquid path 217 to the air heat exchanger 3 through the first expansion valve 6 and the liquid path 214 using the connection point P22 as a coolant inflow part. This coolant flows from the liquid path 217 to the second expansion valve 7 through the connection point P22, the electromagnetic valve 282, the connection point P23, and the high pressure liquid path 219.

### Third Embodiment

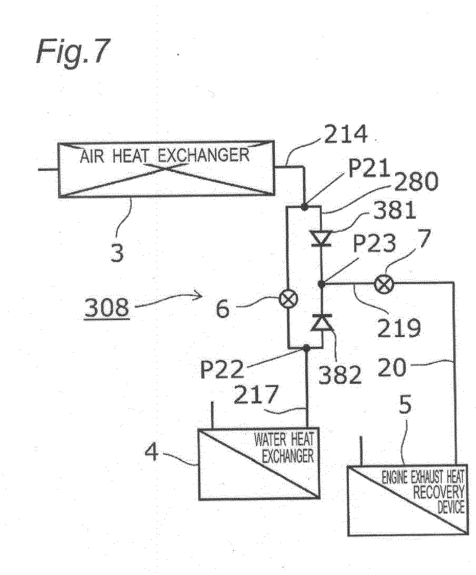

A flow direction control mechanism 308 of a heat pump chiller according to a third embodiment will be described with reference to Fig. 7. Fig. 7 is a configuration diagram of the flow direction control mechanism 308 according to the third embodiment.

As seen Fig. 7, the heat pump chiller according to the third embodiment includes the liquid paths 214 and 217, and the high pressure liquid path 219 in the same way as the second embodiment.

The flow direction control mechanism 308 according to the third embodiment includes two non-return valves 381 and 382 instead of the two electromagnetic valves 281 and 282 according to the second embodiment. The other configurations are same between the third embodiment and the second embodiment. The connection point P23 is positioned on the exit side of the two non-return valves 381 and 382.

During the cold water operation, the coolant from the air heat exchanger 3 flows to the water heat exchanger 4 through the liquid path 214, the first expansion valve 6, and the liquid path 217 by using the connection point P21 as the coolant inflow part. When the aperture of the second expansion valve 7 is controlled, this coolant flows to the second expansion valve 7 through the liquid path 214, the connection point P21, the non-return valve 381, the connection point P23, and the high pressure liquid path 219. The pressure of the connection point P23 is higher than the pressure of the connection point P22, and the coolant therefore does not flow from the connection point P23 to the connection point P21 through the non-return valve 382. During the hot water operation, the coolant from the water heat exchanger 4 flows to the air heat exchanger 3 through the liquid path 217, the first expansion valve 6, and the liquid path 214 by using the connection point P22 as the coolant inflow part. This coolant flows to the second expansion valve 7 through the liquid path 217, the connection point P22, the non-return valve 382, the connection point P23, and the high pressure liquid path 219. The pressure of the connection point P23 is higher than the pressure of the connection point P21 and the coolant therefore does not flow from the connection point P21 to the connection point P23 through the non-return valve 381.

### Fourth Embodiment

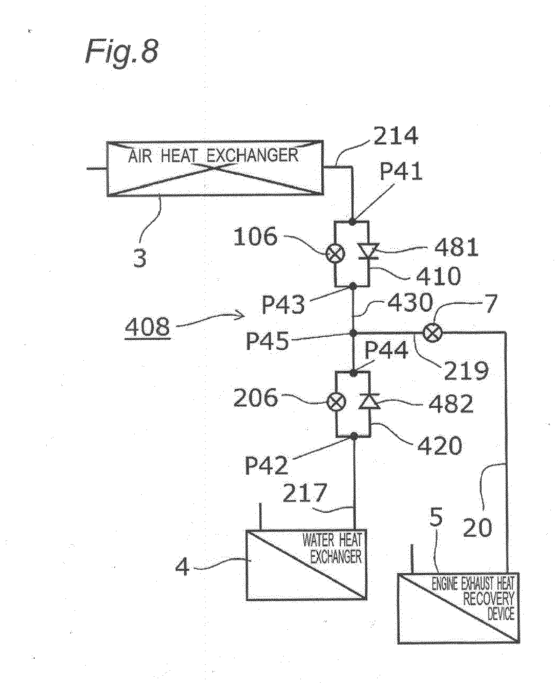

A flow direction control mechanism 408 of a heat pump chiller according to a fourth embodiment will be described with reference to Fig. 8. Fig. 8 is a configuration diagram of the flow direction control mechanism 408 according to the fourth embodiment.

In Fig. 8, the heat pump chiller according to the fourth embodiment includes two first expansion valves 106 and 206 instead of the one first expansion valve 6 in the first to the third embodiments and, includes the liquid paths 214 and 217, and the high pressure liquid path 219 in the same way as the second embodiment. The liquid path 214 connects the air heat exchanger 3 to the one first expansion valve 106, and the liquid path 217 connects the other first expansion valve 206 to the water heat exchanger 4.

The flow direction control mechanism 408 includes two open paths 410 and 420, a connecting path 430, and two non-return valves 481 and 482. The open path 410 branches from the liquid path 214 at a connection point P41 and is connected to the first expansion valve 106 through the non-return valve 481. The open path 420 branches from the liquid path 217 at a connection point P42 and is connected to the first expansion valve 206 through the non-return valve 482. The connecting path 430 connects the two first expansion valves 106 and 206. The open path 410 branches from the connecting path 430 at a connection point P43, and the open path 420 branches from the connecting path 430 at a connection point P44. The high pressure liquid path 219 is connected to the connecting path 430 at a connection point P45. The non return valve 481 is disposed between the connection points P41 and P43 in the open path 410, and the connection point P43 is positioned on the exit side of the non-return valve 481. The non-return valve 482 is disposed between the connection points P42 and P44 in the open path 420, and the connection point P44 is positioned on the exit side of the non-return valve 482.

During the cold water operation, the aperture of the second expansion valve 206 is controlled. The coolant from the air heat exchanger 3 flows from the liquid path 214 to the water heat exchanger 4 through the first expansion valve 106 or the non-return valve 481, the connection point P43, the connecting path 430, the connection point P44, the second expansion valve 206, the connection point P42, and the liquid path 217 by using the connection point P41 as a coolant inflow part. This coolant flows from the connecting path 430 to the second expansion valve 7 through the connection point P45 and the high pressure liquid path 219. During the hot water operation, the aperture of the first expansion valve 106 is controlled. During the hot water operation, the coolant from the water heat exchanger 4 flows from the liquid path 217 to the air heat exchanger 3 through the second expansion valve or the non-return valve 482, the connection point P44, the connecting path 430, the connection point P43, the first expansion valve 106, and the liquid path 214 by using the connection point P42 as a coolant inflow part. This coolant flows from the connecting path 430 to the second expansion valve 7 through the connection point P45 and the high pressure liquid path 219.

### Effects of This Embodiment

The heat pump chiller 100 according to this embodiment achieves the following effects based on the above configuration.
(1) Each of the heat pump chillers according to the first to the fourth embodiments each includes the air heat exchanger 3, the water heat exchanger 4, the operation switching mechanism (the four-way valve 2), the engine exhaust heat recovery device 5, the first expansion valve 6, the second expansion valve 7, the flow direction control mechanism 8, the flow adjusting valve (the three-way valve 33), and the control apparatus 50. When the compressor 1 may stall due to a decrease of the number of rotations during the cold water operation, the control apparatus 50 opens the second expansion valve 7 and the flow adjusting valve (the three-way valve 33) as the coolant and the exhaust heat medium (the cooling water) flow through the engine exhaust heat recovery device 5.
   If the coolant and the exhaust heat medium (the cooling water) flow through the engine exhaust heat recovery device 5 during the cold water operation, the engine exhaust heat recovery device 5 executes the heat exchange and the amount of a heat exchange is therefore relatively small in the water heat exchanger 4. Each of the heat pump chillers according to the first to the fourth embodiments can therefore reduce the amount of a heat exchange in the water heat exchanger during the cold water operation to be lower than that determined based on the permissible lowest number of rotations of the compressor without stopping the driving of the compressor.
(2) According to each of the heat pump chillers according to the first to the fourth embodiments, the control apparatus 50 determines that the necessary number of rotations of the compressor 1 is equal to or lower than the permissible lowest number of rotations when the number of rotations is equal to or lower than the predetermined number of rotations and the value detected by the exiting water temperature sensor 43 is equal to or lower than the target temperature or when the number of rotations is equal to or lower than the predetermined number of rotations and the coolant low pressure is equal to or lower than the predetermined pressure.
   Each of the heat pump chillers according to the first to the fourth embodiments can therefore determine whether the necessary number of rotations of the compressor 1 is equal to or lower than the permissible lowest number of rotations by using the configuration necessary for controlling the temperature of the water.
(3) According to each of the heat pump chillers according to the first to the fourth embodiments, when the hot water operation is currently executed and the exhaust heat medium (the cooling water) flows through the engine exhaust heat recovery device 5, the control apparatus 50 controls the apertures of the first expansion valves 6, 106, and 206 based on the degree of superheat of the coolant flowing through the joined path 12a and controls the aperture of the second expansion valve 7 based on the degree of superheat of the coolant flowing through the low pressure gas path 21engine exhaust heat recovery device 5.

The coolant low pressure and the coolant high pressure vary corresponding to the magnitude of the load on the water circuit 40 side. When the flow volume of the coolant flowing through each of the water heat exchanger 4 and the engine exhaust heat recovery device 5 is adjusted, the coolant low pressure and the coolant high pressure vary. Each of the heat pump chillers according to the first to the fourth embodiments can therefore expand the range of the load capable of being coped with, while suppressing the coolant low pressure and the coolant high pressure within the permissible range.

### Explanations of Letters or Numerals

- 1: compressor
- 2: four-way valve (operation switching mechanism)
- 3: air heat exchanger
- 4: water heat exchanger
- 5: engine exhaust heat recovery device
- 6, 106, 206: first expansion valve
- 7: second expansion valve
- 8: flow direction control mechanism
- 31: engine
- 33: three-way valve (flow adjusting valve)
- 50: control apparatus
- 100: heat pump chiller

## Claims

1. An engine driven heat pump chiller (100) comprising an engine (31) and a compressor (1) for compressing a coolant, the compressor (1) being driven by the engine (31) and that adjusts a temperature of water as a heat medium by using condensation heat or evaporation heat of the coolant, **characterised by** the engine driven heat pump chiller (100) further comprising:
an air heat exchanger (3) configured to function as a condenser condensing the coolant by transmitting heat from the coolant to the air or to function as an evaporator evaporating the coolant by transmitting heat from the air to the coolant;
a water heat exchanger (4) configured to function as a cooling device cooling the water by transmitting heat from the water to a gas-liquid two-phase coolant or to function as a heating device heating water by transmitting heat from a discharged coolant of the compressor to the water;
an operation switching mechanism (2) configured to switch between a cold water operation causing the water heat exchanger (4) to function as a cooling device and a hot water operation causing the water heat exchanger (4) to function as a heating device;
a water temperature sensor configured to detect a temperature of the water discharged from the water heat exchanger (4);
an engine exhaust heat recovery device (5) configured to function as an evaporator of the coolant evaporating the coolant by transmitting exhaust heat of the engine (31) to the coolant through an exhaust heat medium;
a first expansion valve (6) configured to adjust a flow of the coolant in a state of a liquid flowing toward the air heat exchanger (3) during the hot water operation, the first expansion valve (6) adjusting the flow of the coolant in a state of the liquid flowing toward the water heat exchanger (4) during the cold water operation;
a second expansion valve (7) configured to adjust a flow of the coolant in a state of the liquid flowing toward the engine exhaust heat recovery device (5);
a flow direction control mechanism (8) that has the first expansion valve (6) and the second expansion valve (7) disposed in parallel to each other downstream a coolant inflow part thereof;
a flow adjusting valve (33) that adjusts a flow of the exhaust heat medium flowing through the engine exhaust heat recovery device (5); and
a control apparatus (50) configured to control number of rotations of the compressor (1) for a temperature of water discharged from the water heat exchanger (4) to converge on a set target temperature, wherein
when the number of rotations is equal to or lower than predetermined number of rotations and the temperature of the discharged water is equal to or lower than the aimed temperature during the cold water operation, the control apparatus (50) determines that a necessary number of rotations of the compressor (1) is equal to or lower than permissible lowest number of rotations, and controls apertures of the second expansion valve (7) and the flow adjusting valve (33) for the coolant and the exhaust heat medium to flow through the engine exhaust heat recovery device (5).

2. The engine driven heat pump chiller (100) of claim 1, wherein
when the hot water operation is currently executed and the exhaust heat medium flows through the engine exhaust heat recovery device (5), the control apparatus (50) is configured to control an aperture of the first expansion valve (6) based on a degree of superheat of the coolant after the coolant passing through the engine exhaust heat recovery device (5) joins the coolant passing through the air heat exchanger (3), and to control the aperture of the second expansion valve (7) based on a degree of superheat of the coolant after passing through the engine exhaust heat recovery device (5) and before joining the coolant passing through the air heat exchanger (3).

## Patentansprüche

1. Motorgetriebener Wärmepumpenkühler (100), der einen Motor (31) und einen Kompressor (1) zum Komprimieren eines Kühlmittels umfasst, wobei der Kompressor (1) von dem Motor (31) angetrieben wird, und der eine Temperatur von Wasser als Wärmemedium unter Verwenden von Kondensationswärme oder Verdampfungswärme des Kühlmittels einstellt, **dadurch gekennzeichnet, dass** der motorgetriebene Wärmepumpenkühler (100) ferner umfasst:
einen Luftwärmetauscher (3), der dazu konfiguriert ist, als ein Kondensator zu funktionieren, der das Kühlmittel durch Übertragen von Wärme von dem Kühlmittel zu der Luft kondensiert, oder als ein Verdampfer zu funktionieren, der das Kühlmittel durch Übertragen von Wärme von der Luft zu dem Kühlmittel verdampft;
einen Wasserwärmetauscher (4), der dazu konfiguriert ist, als eine Kühlvorrichtung zu funktionieren, die das Wasser durch Übertragen von Wärme von dem Wasser auf ein Gas-Flüssigkeits-Zweiphasenkühlmittel kühlt, oder als eine Heizvorrichtung zu funktionieren, die Wasser durch Übertragen von Wärme von einem abgegebenen Kühlmittel des Kompressors zu dem Wasser erwärmt;
einen Betriebsumschaltmechanismus (2), der dazu konfiguriert ist, zwischen einem Kaltwasserbetrieb, der bewirkt, dass der Wasserwärmetauscher (4) als eine Kühlvorrichtung funktioniert, und einem Warmwasserbetrieb, der bewirkt, dass der Wasserwärmetauscher (4) als eine Heizvorrichtung funktioniert, umschaltet;
einen Wassertemperatursensor, der dazu konfiguriert ist, eine Temperatur des Wassers, das von dem Wasserwärmetauscher (4) abgegeben wird, zu erfassen;
eine Motorabgas-Wärmerückgewinnungsvorrichtung (5), die dazu konfiguriert ist, als ein Verdampfer des Kühlmittels zu funktionieren, der das Kühlmittel durch Übertragen von Abgaswärme des Motors (31) über ein Abgaswärmemedium zu dem Kühlmittel verdampft;
ein erstes Expansionsventil (6), das dazu konfiguriert ist, einen Fluss des Kühlmittels in einem Zustand einer Flüssigkeit, die während des Heißwasserbetriebs zu dem Luftwärmetauscher (3) fließt, einzustellen, wobei das erste Expansionsventil (6) den Fluss des Kühlmittels in einem Zustand der Flüssigkeit, die während des Kaltwasserbetriebs zu dem Wasserwärmetauscher (4) fließt, einstellt;
ein zweites Expansionsventil (7), das dazu konfiguriert ist, einen Fluss des Kühlmittels in einem Zustand der Flüssigkeit, die zu der Motorabgas-Wärmerückgewinnungsvorrichtung (5) fließt, einzustellen;
einen Flussrichtungssteuermechanismus (8), der das erste Expansionsventil (6) und das zweite Expansionsventil (7) aufweist, die parallel zueinander stromabwärts eines Kühlmittelzuflussteils davon angeordnet sind;
ein Flusseinstellventil (33), das einen Fluss des Abgaswärmemediums einstellt, das durch die Motorabgas-Wärmerückgewinnungsvorrichtung (5) fließt; und
ein Steuergerät (50), das dazu konfiguriert ist, die Anzahl von Umdrehungen des Kompressors (1) für eine Temperatur des Wassers, das aus dem Wasserwärmetauscher (4) abgegeben wird, zu steuern, um auf eine eingestellte Zieltemperatur zu konvergieren, wobei,
wenn die Anzahl von Umdrehungen gleich oder niedriger als die vorbestimmte Anzahl von Umdrehungen ist, und die Temperatur des abgelassenen Wassers gleich oder niedriger als die angestrebte Temperatur während des Kaltwasserbetriebs ist, das Steuergerät (50) bestimmt, dass eine notwendige Anzahl von Umdrehungen des Kompressors (1) gleich oder kleiner als die zulässige niedrigste Anzahl von Umdrehungen ist, und Öffnungen des zweiten Expansionsventils (7) und des Flusseinstellventils (33) steuert, damit das Kühlmittel und das Abgaswärmemedium durch die Motorabgas-Wärmerückgewinnungsvorrichtung (5) fließen.

2. Motorgetriebener Wärmepumpenkühler (100) nach Anspruch 1, wobei, wenn der Warmwasserbetrieb gegenwärtig ausgeführt wird, und das Abgaswärmemedium durch die Motorabgas-Wärmerückgewinnungsvorrichtung (5) fließt, das Steuergerät (50) dazu konfiguriert ist, eine Öffnung des ersten Expansionsventils (6) basierend auf einem Überhitzungsgrad des Kühlmittels zu steuern, nachdem sich das Kühlmittel, das durch die Motorabgas-Wärmerückgewinnungsvorrichtung (5) geflossen ist, mit dem Kühlmittel vereint hat, das durch den Luftwärmetauscher (3) durchgeht, und um die Öffnung des zweiten Expansionsventils (7) basierend auf einem Überhitzungsgrad des Kühlmittels zu steuern, nachdem es durch die Motorabgas-Wärmerückgewinnungsvorrichtung (5) durchgegangen ist, und bevor es sich mit dem Kühlmittel vereint, das durch den Luftwärmetauscher (3) durchgegangen ist.

## Revendications

1. Refroidisseur de pompe à chaleur (100) à entraînement par moteur comprenant un moteur (31) et un compresseur (1) pour comprimer un fluide frigorigène, le compresseur (1) étant entraîné par le moteur (31) et lequel règle une température de l'eau en tant que milieu chauffant en utilisant la chaleur de condensation ou la chaleur d'évaporation du fluide frigorigène, **caractérisé en ce que** le refroidisseur de pompe à chaleur (100) à entraînement par moteur comprend en outre :
un échangeur de chaleur à air (3) conçu pour fonctionner sous la forme d'un condenseur condensant le fluide frigorigène par transmission de la chaleur du fluide frigorigène à l'air ou pour fonctionner sous la forme d'un évaporateur évaporant le fluide frigorigène par transmission de la chaleur de l'air au fluide frigorigène ;
un échangeur de chaleur à eau (4) conçu pour fonctionner sous la forme d'un dispositif de réfrigération fluide frigorigène l'eau par transmission de la chaleur de l'eau à un fluide frigorigène diphasique gaz-liquide ou pour fonctionner sous la forme d'un dispositif de chauffage chauffant l'eau par transmission de la chaleur d'un fluide frigorigène évacué du compresseur à l'eau ;
un mécanisme de commutation de fonctionnement (2), conçu pour commuter entre un fonctionnement à l'eau froide, amenant l'échangeur de chaleur à eau (4) à fonctionner sous la forme d'un dispositif de réfrigération, et un fonctionnement à l'eau chaude, amenant l'échangeur à chaleur à eau (4) à fonctionner sous la forme d'un dispositif de chauffage ;
un capteur de température d'eau, conçu pour détecter une température de l'eau évacuée de l'échangeur de chaleur à eau (4) ;
un dispositif de récupération de chaleur d'échappement de moteur (5), conçu pour fonctionner sous la forme d'un évaporateur du fluide frigorigène évaporant le fluide frigorigène par transmission de la chaleur d'échappement de moteur (31) au fluide frigorigène à travers un milieu chauffant d'échappement ;
un premier détendeur (6), conçu pour régler un écoulement du fluide frigorigène dans un état du liquide s'écoulant vers l'échangeur de chaleur à air (3) lors du fonctionnement à l'eau chaude, le premier détendeur (6) réglant l'écoulement du fluide frigorigène dans un état du liquide s'écoulant vers l'échangeur de chaleur à eau (4) lors du fonctionnement à l'eau froide ;
un second détendeur (7), conçu pour régler un écoulement du fluide frigorigène dans un état du liquide s'écoulant vers le dispositif de récupération de chaleur d'échappement de moteur (5) ;
un mécanisme de commande de sens d'écoulement (8), dont le premier détendeur (6) et le second détendeur (7) sont disposés parallèlement l'un à l'autre en aval d'une partie d'entrée de fluide frigorigène de celui-ci ;
une soupape de réglage d'écoulement (33), laquelle règle un écoulement du milieu chauffant d'échappement s'écoulant à travers le dispositif de récupération de chaleur d'échappement de moteur (5) ; et
un appareil de commande (50) conçu pour commander le nombre de rotations du compresseur (1) pour qu'une température de l'eau évacuée de l'échangeur de chaleur à eau (4) converge vers une température cible définie, dans lequel
lorsque le nombre de rotations est inférieur ou égal au nombre prédéterminé de rotations et que la température de l'eau évacuée est inférieure ou égale à la température visée lors du fonctionnement à l'eau froide, l'appareil de commande (50) détermine qu'un nombre nécessaire de rotations du compresseur (1) est inférieur ou égal au nombre de rotations le plus bas admissible et commande les ouvertures du second détendeur (7) et de la soupape de réglage d'écoulement (33) pour que le fluide frigorigène et le milieu chauffant d'échappement circulent dans le dispositif de récupération de chaleur d'échappement de moteur (5).

2. Refroidisseur de pompe à chaleur (100) à entraînement par moteur selon la revendication 1, dans lequel lorsque le fonctionnement à l'eau chaude est actuellement exécuté et que le milieu chauffant d'échappement s'écoule à travers le dispositif de récupération de chaleur d'échappement de moteur (5), l'appareil de commande (50) est conçu pour commander une ouverture du premier détendeur (6) en fonction d'un degré de surchauffe du fluide frigorigène après que le fluide frigorigène traversant le dispositif de récupération de chaleur d'échappement de moteur (5) a rejoint le fluide frigorigène traversant l'échangeur de chaleur à air (3) et pour commander l'ouverture du second détendeur (7) en fonction d'un degré de surchauffe du fluide frigorigène après sa traversée du dispositif de récupération de chaleur d'échappement de moteur (5) et avant qu'il ne rejoigne le fluide frigorigène traversant l'échangeur de chaleur à air (3).
